# EUROPÄISCHE PATENTSCHRIFT

(11) **EP 2 470 857 B1**
(45) Veröffentlichungstag und Bekanntmachung des Hinweises auf die Patenterteilung: **02.05.2018**
(21) Anmeldenummer: 10750096.9
(22) Anmeldetag: 26.08.2010
(51) Int. Cl.: G01B 11/245, A61C 19/04

(54) **VERFAHREN UND ANORDNUNG ZUR ERMITTLUNG EINES GESAMTDATENSATZES EINES ZU MESSENDEN KAUORGANS**
METHOD AND ARRANGEMENT FOR DETERMINING A COMBINED DATA RECORD FOR A MASTICATORY ORGAN TO BE MEASURED
PROCÉDÉ ET AGENCEMENT PERMETTANT DE DÉTERMINER UN ENSEMBLE DE DONNÉES GLOBALES D'UN ORGANE MASTICATEUR À MESURER

(30) Priorität: 26.08.2009 DE 102009038588
(43) Veröffentlichungstag der Anmeldung: 04.07.2012
(73) Patentinhaber: DENTSPLY SIRONA Inc., York, PA 17401 (US)
(72) Erfinder: ERTL, Thomas, 63691 Ranstadt (DE)
(74) Vertreter: Stoffregen, Hans-Herbert
(86) Internationale Anmeldenummer: PCT/EP2010/062517
(87) Internationale Veröffentlichungsnummer: WO 2011/023784

(56) Entgegenhaltungen:
- EP-A1- 2 166 303
- DE-A1- 3 810 455
- DE-A1- 4 301 538
- US-A- 5 800 341
- US-A1- 2004 153 283
- US-A1- 2005 076 914
- US-A1- 2005 168 742
- US-A1- 2006 221 072

## Beschreibung

Die Erfindung bezieht sich auf ein Verfahren zur Ermittlung eines Gesamtdatensatzes eines Kauorgans oder Bereichs eines solchen unter Verwendung von Einzeldatensätzen, denen Teilscans des Kauorgans oder dessen Bereichs zu Grunde liegen, die mit zumindest einem Sensor gemessen werden. Auch nimmt die Erfindung Bezug auf eine Vorrichtung zum Scannen eines Kauorgans oder eines Bereich von diesem umfassend eine Halterung mit mehreren von dieser ausgehenden Sensoren, mittels derer das Kauorgan oder der Bereich gescannt wird

Um ein Objekt dreidimensional zu messen, ist es bekannt, dieses dreidimensional zu scannen, um aus den Einzeldatensätzen einen Gesamtdatensatz zu gewinnen, der die Form des zu messenden Objektes wiedergibt. Diese Daten sind z. B. in der Zahnprothetik erforderlich, um im CAD/CAM-Verfahren Rekonstruktionen herzustellen.

Ein Problem beim 3D-Scannen ohne festen Bezug zwischen einzelnen 3D-Aufnahmen ist der Aufbau eines mit zunehmender Einzelscan-Anzahl akkumulierenden Fehlers beim Registrieren (Zusammenfügen, Matchen) der Einzelscans zu einem Gesamtdatensatz. Zur Verringerung dieses Fehlers können Hilfsteile mit bekannter Geometrie, also Referenzierungen zusammen mit der zu bestimmenden Geometrie gescannt werden.

Der DE-A-10 2006 013 584 (US-B-7,705,929) sind eine Vorrichtung sowie ein Verfahren zum Vermessen von Bauteilen zu entnehmen. Dabei können von einer Traverse mehrere Triangulationssensoren ausgehen, die entlang eines Verschiebeweges bewegbar angeordnet sind.

Die US-B-6,288,382 bezieht sich auf ein konfokales Scansystem, um mit Hilfe eines Pin-Hole-Arrays ein Objekt zu messen.

Gegenstand der US-A-2006/0221072 ist ein 3D-Bildsystem unter Verwendung von Stereo-Kameras. Dabei werden von den Stereo-Kameras aufgenommene und sich überlappende Bilder gematcht, um ein Gesamtbild zu erhalten.

Auf der Umfangsfläche eines Endoskops ist nach der US-A-5,800,341 eine Vielzahl von Sensoren angeordnet, um ein Gesamtbild zu gewinnen.

Gegenstand der DE-A-43 01 538 sind ein Verfahren und eine Anordnung zum berührungslosen dreidimensionalen Messen von Gebissmodellen unter Verwendung von Lichtschnittsensoren.

Eine Intubatorvorrichtung nach der US-A-2005/0076914 weist einen Spitzensensor sowie Halleffect-Sensoren auf. Der Intubator enthält eine Spannungsquelle sowie eine elektrische Schaltung mit einem Microprozessor.

Der DE 38 10 455 A1 sind ein Verfahren und eine Vorrichtung zur berührungsfreien räumlichen Erfassung eines unregelmäßigen Körpers, insbesondere eines Kieferbereichs zu entnehmen. Hierzu sind Aufnahmeeinrichtungen untereinander gekoppelt und mittels eines Schrittmotors entlang von Zahnreihen verschiebbar.

Der vorliegenden Erfindung liegt die Aufgabe zu Grunde, ein Verfahren und eine Anordnung der eingangs genannten Art so weiterzubilden, dass sich akkumulierende Fehler vermeiden lassen. Ein Entzerren bzw. Korrigieren einzelner Daten soll möglich sein. Auch soll auf einfache Weise ein 3D-Datensatz generiert werden können, der die Kontur des Objekts überaus genau repräsentiert. Ferner soll eine einfache Handhabbarkeit der Vorrichtung gegeben sein, um ein Kauorgan bzw. einen Abschnitt von diesem problemlos scannen zu können.

Zur Lösung der Aufgabe sieht die Erfindung verfahrensmäßig im Wesentlichen vor, dass dass mittels mehrerer in ortsfester Beziehung auf einer Halterung angeordneter Sensoren Teilscans des Kauorgans oder des Bereichs eines solchen ermittelt werden, aus deren Einzeldatensätzen ein das Kauorgan oder dessen Bereichs repräsentierender Gesamtdatensatz berechnet wird, wobei während der Messung die Sensoren unkorreliert zu dem Kauorgan oder dessen Bereich bewegt werden, und wobei die Halterung
eine Geometrie zum Umfassen eines zu messenden Bereichs des Kauorgans aufweist und die Sensoren so auf der Halterung angeordnet sind, dass gleichzeitig okklusaler, vestibulärer und palatinaler/lingualer Bereich von dem einen Bereich des Kauorgans gescannt werden, und wobei die Halterung (20) mit den Sensoren (1,...,n) von einer transparenten Umhüllenden abgedeckt wird.

Zur Ermittlung des Gesamtdatensatzes werden die verwendeten Sensoren in ortsfester Beziehung zueinander angeordnet, so dass die von jedem Sensor erfassten Teilbereiche eine eindeutige Zuordnung, also Ausrichtung zueinander aufweisen und somit eine Korrektur bzw. Entzerrung nicht erforderlich ist. Es wird ein eigenständiges Scansystem benutzt, bei dem insbesondere die vollen Anforderungen an ein Scansystem bezüglich der erforderlichen Scantiefe, der erforderlichen Abdeckung der Objektgeometrie und der Fähigkeit, Objekte mit einem ungünstigen Aspektverhältnis scannen zu können, erfüllt werden.

Es ist vorgesehen, dass die Sensoren Einzelscan-Optiken aufweisen, die nach dem Prinzip Multipunkt OCT (optische Kohärenztomografie), Multipunkt konfokaler Abbildung oder Multipunkt konfokal, farbdispersiv aufgebaut werden.

Bevorzugterweise werden als Sensor ein CCD-, CMOS-, InGaAs- oder PbS-Sensor verwendet.

Als Sensor sollte eine Miniaturkamera im Submillimeterbereich verwendet werden.

Des Weiteren zeichnet sich die Erfindung dadurch aus, dass die für jeden Sensor wie Miniaturkamera benötigte Optik konfokal ausgebildet sein kann.

Unabhängig hiervon sollten in der Halterung neben den Sensoren eine Elektronik zum Zusammenführen von Datenströmen der Sensoren sowie eine Spannungsquelle integriert sein. Diese kann aus einer Batterie mit induktiver Lademöglichkeit bestehen.

Die Übertragung der Daten von der Halterung sollte vorzugsweise drahtlos erfolgen.

Bevorzugtes Einsatzgebiet der erfindungsgemäßen Lehre ist der Bereich des 3D-Scannens eines Kiefers bzw. Kieferbereichs. Daher sollte die Halterung mit den von dieser ausgehenden Elementen derart dimensioniert sein, dass ein zumindest teilweises Einführen in einen Mund eines Patienten erfolgen kann.

Die Sensoren sind auf der Halterung des Weiteren derart angeordnet, dass gleichzeitig okklusaler, vestibulärer und platinaler/lingualer Bereich von zumindest einem Bereich des Kauorgans gescannt werden kann.

Die Erfindung bezieht sich daher auch auf eine Vorrichtung zum Scannen eines Kauorgans oder eines Bereich von diesem umfassend eine Halterung mit mehreren von dieser ausgehenden Sensoren, mittels derer das Kauorgan oder der Bereich gescannt wird, und zeichnet sich dadurch aus, dass die Halterung eine dreidimensionale Geometrie zum zumindest bereichsweisen Umfassen eines Kieferbereichs aufweist, dass die Sensoren Einzelscan-Optiken aufweisen, die nach dem Prinzip Multipunkt OCT (optische Kohärenztomografie), Multipunkt konfokaler Abbildung oder Multipunkt konfokal, farbdispersiv aufgebaut sind und Scanflächen ergeben, dass in der die Sensoren aufweisenden Halterung eine Elektronik zum Zusammenführen von mit den Sensoren ermittelten Daten integriert ist, dass die Sensoren derart an der Halterung befestigt sind, dass gleichzeitig okklusaler, vestibulärer und palatinaler/lingualer Bereich von zumindest einem Bereich des Kauorgans scanbar ist, und dass die Halterung mit einer zumindest die Sensoren abdeckenden transparenten Umhüllenden versehen ist.

Die in der Elektronik zusammengeführten Daten werden vorzugsweise berührungslos an eine Auswerteeinheit übertragen. Als Elektronik ist ein Field-Programmable Gate Array (FPGA) zu bevorzugen.

Bevorzugterweise gehen von der Halterung Sensoren gleicher Bauart aus, gleichwenn auch in Abhängigkeit von der Gestaltung der Halterung Sensoren unterschiedlicher Bauart zum Einsatz gelangen können. Insbesondere handelt es sich bei dem Sensor um
einen solchen aus der Gruppe CCD-, CMOS-, InGaAs-, PbS-Sensor, Miniaturkamera im Submillimeterbereich.

Da im bzw. am Mundbereich gemessen wird, ist des Weiteren vorgesehen, dass die Halterung mit einer zumindest die Sensoren abdeckenden transparenten Umhüllenden versehen ist. Insbesondere sind sämtliche von der Halterung ausgehenden Elemente von einer entsprechenden Umhüllenden abgedeckt.

Von der Halterung kann des Weiteren ein Inertialsystem ausgehen, um die Position relativ zu dem messenden Objekt zu erfassen.

Weitere Einzelheiten, Vorteile und Merkmale der Erfindung ergeben sich nicht nur aus den Ansprüchen, den diesen zu entnehmenden Merkmalen - für sich und/oder in Kombination-, sondern auch aus der nachfolgenden Beschreibung von der Zeichnung zu entnehmenden bevorzugten Ausführungsbeispielen.

Es zeigen:
- Abbildung 1: zusammengesetzte Einzelscan-Bereiche,
- Abbildung 2: einen Überlappungsbereich benachbarter Einzelscan-Bereiche,
- Abbildung 3: eine Prinzipdarstellung eines Scansystems,
- Abbildung 4: Scanflächen bei der Verwendung von konfokalen oder OCT-Einzelscan-Systemen,
- Abbildung 6: Scanbereiche mit chromatisch dispersiven konfokalen Multipunkt-Messsystemen und
- Abbildung 7: Scanbereiche.

Die erfindungsgemäße Lehre soll am Beispiel eines Scanners für dentale Anwendungen im Mund eines Patienten beschrieben werden.

Beim Scannen von semitransparenten Objekten wie Zähnen oder Gewebe, aber auch Keramik etc. haben Verfahren, die keinerlei oder zumindest eine nicht deckende Beschichtung der zu messenden Geometrie benötigen, klare Vorteile für den Anwender. Daher soll vorzugsweise, aber nicht ausschließlich ein derartiges Verfahren zur Anwendung kommen.

Die Einzelscan-Optiken sind nach den Prinzipien Multipunkt OCT, Multipunkt konfokale Abbildung oder Multipunkt konfokal, farbdispersiv aufgebaut.

Durch Miniaturkameras mit CMOS-Chips mit Abmessungen im Sub mm-Bereich (z. B. AWAIBA) sind derartige Systeme mittlerweile in den benötigen Abmessungen möglich geworden.

Die Anzahl der Einzelscan-Systeme umfassend jeweils einen Sensor (vorzugsweise CCD oder CMOS aber auch InGaAs, PbS) mit Optik kann dabei von 2 bis 1000 variieren, liegt vorzugsweise zwischen 10 bis 100.

Das System kann zur Messung der Position relativ zu dem zu messenden Objekt ein Inertialsystem enthalten.

Die Pixelanzahl der Einzelsensoren kann zwischen 100 x 100 und 3000 x 3000 liegen.

In einer Halterung bzw. einem Träger sind die Sensoren, die Elektronik zum Zusammenführen der Datenströme der Einzelscan-Systeme, eine Batterie mit induktiver Lademöglichkeit und vorzugsweise eine drahtlose Datenübertragung sowie optional ein Intertialsystem integriert.

Um hygienischen Anforderungen zu genügen, ist ein transparenter Cover über das eigentliche Scansystem geschoben.

Die Datenübertragung erfolgt vorzugsweise drahtlos, kann aber auch drahtgebunden erfolgen.

Je nach verwendeten Einzelscan-Systemen werden unterschiedliche Scantiefenbereiche abgedeckt.

Im Falle der rein konfokalen OCT Multipunkt Anordnung besteht der Scanbereich vorzugsweise aus einer Fläche bzw. einem eingeschränkten Tiefenbereich, der kleiner ist als die zu scannende Objekttiefe, da in beiden Fälle eine mechanische Verschiebung der Konfokal- oder Interferenzfläche bei den notwendigen Dimensionen innerhalb der Einzelscansysteme schwierig ist.

Die notwendige Tiefe wird dadurch erreicht, dass die Messung erfolgt, während der Träger relativ zum Objekt bewegt wird. So werden durch Annäherung des Trägers an das Objekt erst die dem Einzelscan-System zugewandten Teile des Objekts erfasst. Dann wandert die Konfokal-/Interferenzebene zu den weiter entfernten Teilen des Objekts.

Eine korrelierte Bewegung oder ein Anhalten des Trägers während einer Messung ist nicht erforderlich. Vielmehr wird eine unkorrelierte Bewegung der Halterung zu dem Objekt durchgeführt.

Zusammengefügt werden die einzelnen Ebenen, also den Messebenen, allein durch optimierte Registrierung (Matchen) oder auch mit Hilfe zusätzlicher Positionsdaten aus der optionalen Intertialplattform, die zusammen mit einer ebenfalls optionalen Plattform in Patientenkontakt betrieben werden kann.

Im Falle der chromatisch dispersiven konfokalen Multipunktanordnung im EinzelscanSystem ist zumindest ein Tiefenmessbereich simultan messbar, so dass im Idealfall mit einer Aufnahme aller Einzelscan-Systeme die Geometrie vollständig oder zumindest Teiltiefenbereich des Objekts gleichzeitig erfasst werden können. Hierdurch wird die anschließende Registrierung erleichtert.

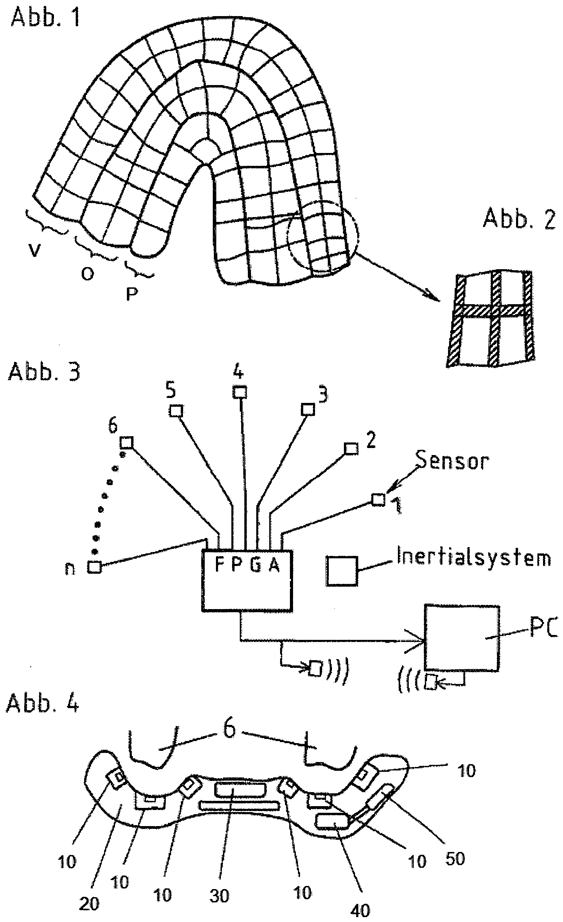

In Abbildung 1 wird prinzipiell die Segmentierung von Einzelscan-Bereichen dargestellt, die aus Einzelscans bestehen, die mittels von einer gemeinsamen Halterung ausgehenden und damit in ortsfester Beziehung zueinander stehender Sensoren gemessen werden. Hierbei handelt es sich insbesondere um Miniaturkameras mit z. B. CMOS-Chips mit Abmessungen im Submillimeterbereich, wie diese von Awaiba angeboten werden.

Die von der Halterung ausgehenden Sensoren oder Einzelscan-Systeme können zwischen 2 bis 1000 variieren, liegen jedoch bevorzugterweise zwischen 10 und 100.

Ein Einzelscan-System umfasst dabei neben der Sensorfläche wie CCD, CMOS, InGaAs oder PbS auch die Optik, wobei die Optik für jeden einzelnen Sensor nach den Prinzipien Multipunkt OCT, Multipunkt konfokale Abbildung oder Multipunkt konfokal farbdispersiv aufgebaut ist.

Die Anzahl der Pixel pro Sensor kann zwischen 100 x 100 und 3000 x 3000 liegen.

Man erkennt aus der Abbildung 1 des Weiteren, dass z. B. ein Kiefer eines Kauorgans aufgenommen wird, wobei gleichzeitig der okklusale Bereich O, der vestibuläre Bereich V und der platinale oder linguale Bereich P abgedeckt ist.

In Abbildung 2 wird verdeutlicht, dass die Einzelscans der Abbildung 1 sich teilweise überlappen.

Aus den Abbildungen 1 und 2 ergibt sich ferner, dass die Sensoren derart angeordnet werden, dass die Einzelscans dieser lückenlos aneinander grenzen oder sich zumindest teilweise abschnittsweise, also in ihren Randbereichen überlappen, um ein Matchen zu ermöglichen.

Rein prinzipiell sind in der Abbildung 3 die Komponenten dargestellt, mit denen die Einzelscans ermittelt werden, die eine ortsfeste Beziehung zueinander aufweisen. Das System umfasst 1 ... n Sensoren der jeweiligen Einzelscan-Systeme, eine Field Programmable Gate Array (FPGA) - Elektronik zum Zusammenfügen der Datenströme der Einzelscan-Systeme mit den Sensoren 1 ... n , bevorzugterweise ein Intertialsystem zur Bereitstellung von etwaigen Bewegungsdaten sowie Komponenten zur Datenübertragung an einen PC zur Berechnung der Geometrie. Der PC kann auch als User Interface verwendet werden. Aus der Prinzipdarstellung wird erkennbar, dass die Datenübertragung drahtgebunden oder drahtlos erfolgen kann.

Die Einzelscan-Systeme mit der Elektronik gehen von einer gemeinsamen Halterung 20 aus, die auch als Träger bezeichnet werden kann (Abb. 4). In der Halterung 20 sind die Einzelscan-Systeme 10 integriert. Ferner ist eine Batterie 40 und gegebenenfalls eine Spule 50 für ein induktives Ladungssystem für die Batterie 40 vorgesehen. Ferner kann optional neben der Elektronik 30 ein Intertialsystem angeordnet werden. Die entsprechende Anordnung ist dabei in Bezug auf die Sensoren 1 ... n bzw. die Einzelscan-Systeme 10 ... N derart geometrisch ausgelegt, dass ein zu messender Kieferbereich teilweise umfasst wird, um folglich Gesamt-Einzelscan-Bereiche zu messen, wie diese der Abbildung 1 zu entnehmen sind.

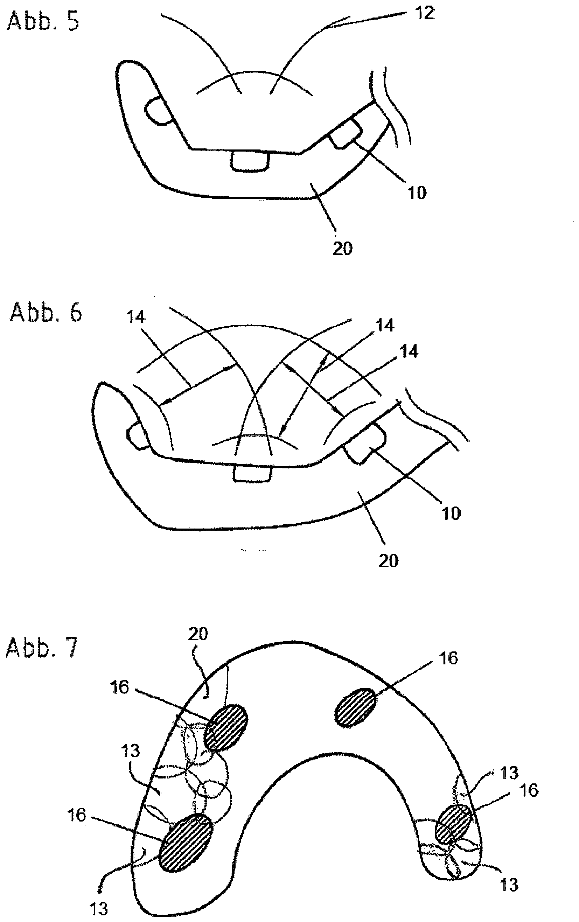

Da die Einzelscan-Systeme nach dem Prinzip Multipunkt OCT oder Multipunkt konfokaler Abbildung aufgebaut sind, ergeben sich entsprechend der Abbildung 5 Scanflächen 12. Mit 10 sind die Einzelscan-Systeme und mit 20 die Halterung gekennzeichnet.

Im Falle eines chromatisch dispersiven konfokalen Multipunkt-Messsystems für die Einzelmesssysteme, ergibt sich ein Tiefenscan-Bereich 14, wie dieser der Abbildung 6 zu entnehmen ist. Die Einzelscan-Systeme sind wiederum mit 10 und die Halterung bzw. der Träger mit 20 gekennzeichnet.

Bei einer weiteren Lösung, die nicht unter die Erfindung fällt, können Einzelscans ohne ortsfeste Zuordnung zueinander zur Ermittlung von Gesamtdaten eines Gesamtdatensatzes benutzt werden. Hierzu gelangen als erste Sensoren bezeichnete Sensoren zum Einsatz, die in einem ersten Gerät angeordnet sind. Um die Einzelscans einander zuzuordnen bzw. einen aus diesen berechneten Gesamtdatensatz zu entzerren bzw. zu korrigieren. werden einzelne fest geometrisch eindeutig einander zugeordnete nicht zusammenhängende Scanbereiche 16 benutzt. Diese Scanbereiche 16 werden mittels zweiter Sensoren gemessen, die in ortsfester Beziehung zueinander in einem zweiten Gerät angeordnet sind.

Dabei besteht die Möglichkeit, die mit den von den in ortsfester Beziehung stehenden Sensoren erfassten und somit eindeutig einander zugeordneten Scanbereichen 16 (Abb. 7) die von zumindest einem ersten Sensoren ermittelten Scanbereiche 13 zu korrigieren, um sodann einen Gesamtdatensatz zu berechnen. Um den Gesamtdatensatz zu berechnen, müssen sich die Einzelscans 13 untereinander überlappen und einige Einzelscans 13 überlappen die Scanbereiche 16. Mit anderen Worten wird durch Registrieren der Einzelscanbereiche 13 zueinander sowie den Scanbereichen 16 eine Korrektur der Einzelscans 13 ermöglicht.

Die Einzelscanbereiche 13 können auch mit einem einzigen Sensor eines Geräts gemessen werden.

Alternativ und bevorzugt besteht die Möglichkeit, zunächst aus den nicht in ortsfester Beziehung stehenden Einzelscans 13 einen Gesamtdatensatz durch Registrieren dieser zu berechnen, der das Objekt bzw. den zu messenden Bereich repräsentiert. Dieser Gesamtdatensatz wird sodann unter Einbeziehung der von den in ortsfester Beziehung stehenden Sensoren erfassten Einzelscans bzw. Scanbereiche 16 korrigiert, so dass insbesondere akkumulierte Fehler der Einzelscandaten, also der Daten der Bereiche 13, korrigiert werden können.

Das Korrigieren der Scanbereiche 13 durch die Scanbereiche 16 und sodann das Berechnen des Gesamtdatensatzes aus den korrigierten Daten der Scanbereiche 13 stellt insoweit eine Äquivalenz zu einer Korrektur des aus den Einzelscans 13 berechneten Gesamtdatensatzes dar.

Aufgrund der erfindungsgemäßen Lehre wird folglich ein 3D-Gesamtdatensatz hoher Genauigkeit zur Verfügung gestellt, der den zu messenden Bereich des Kauorgans bzw. des Kiefers repräsentiert.

## Patentansprüche

1. Verfahren zur Ermittlung eines Gesamtdatensatzes eines Kauorgans oder Bereichs eines solchen unter Verwendung von Einzeldatensätzen, denen Teilscans des Kauorgans oder dessen Bereichs zu Grunde liegen, die mit zumindest einem Sensor (1,... ,n) gemessen werden,
**dadurch gekennzeichnet,**
**dass** mittels mehrerer in ortsfester Beziehung auf einer Halterung (20) angeordneter Sensoren (1,..., n) Teilscans des Kauorgans oder des Bereichs eines solchen ermittelt werden, aus deren Einzeldatensätzen ein das Kauorgan oder dessen Bereichs repräsentierender Gesamtdatensatz berechnet wird, wobei während der Messung die Sensoren unkorreliert zu dem Kauorgan oder dessen Bereich bewegt werden, und wobei die Halterung eine Geometrie zum Umfassen eines zu messenden Bereichs des Kauorgans aufweist und die Sensoren so auf der Halterung angeordnet sind, dass gleichzeitig okklusaler, vestibulärer und palatinaler/lingualer Bereich von dem einen Bereich des Kauorgans gescannt wird, und wobei die Halterung (20) mit den Sensoren (1,...,n) von einer transparenten Umhüllenden abgedeckt wird.

2. Verfahren nach Anspruch 1,
**dadurch gekennzeichnet,**
**dass** die Sensoren (1,...,n) Einzelscan-Optiken aufweisen, die nach dem Prinzip Multipunkt OCT (optische Kohärenztomografie), Multipunkt konfokaler Abbildung oder Multipunkt konfokal, farbdispersiv aufgebaut werden.

3. Verfahren nach Anspruch 1 oder 2,
**dadurch gekennzeichnet,**
**dass** als Sensor (1,...,n) ein CCD-, CMOS-, InGaAs- oder PbS-Sensor verwendet wird.

4. Verfahren nach zumindest einem der Ansprüche 1 bis 3,
**dadurch gekennzeichnet,**
**dass** als Sensor (1,...,n) eine Miniaturkamera im Submillimeterbereich verwendet wird.

5. Verfahren nach zumindest Anspruch 1,
**dadurch gekennzeichnet,**
**dass** die Optik des Sensors (1,...,n) konfokal ausgebildet wird.

6. Verfahren nach Anspruch 1,
**dadurch gekennzeichnet,**
**dass** in der Halterung (20) neben den Sensoren (1,...,n) eine Elektronik (30) zum Zusammenführen von Datenströmen der Sensoren sowie eine Spannungsquelle integriert werden, wobei vorzugsweise als Spannungsquelle eine Batterie (40) mit induktiver Lademöglichkeit verwendet wird.

7. Verfahren nach zumindest Anspruch 1,
**dadurch gekennzeichnet,**
**dass** die Übertragung der Daten der von der Halterung (20) ausgehenden Sensoren (1,...,n) drahtlos erfolgt.

8. Verfahren nach zumindest Anspruch 1,
**dadurch gekennzeichnet,**
**dass** die Halterung (20) mit den von dieser ausgehenden Elementen derart dimensioniert wird, dass ein zumindest teilweises Einführen in einen Mund eines Patienten erfolgt.

9. Verfahren nach zumindest Anspruch 1,
**dadurch gekennzeichnet,**
**dass** die Sensoren (1,...,n) derart angeordnet werden, dass die Einzelscans dieser lückenlos aneinander grenzen oder sich zumindest abschnittsweise überlappen.

10. Vorrichtung zum Scannen eines Kauorgans oder eines Bereich von diesem umfassend eine Halterung (20) mit mehreren von dieser ausgehenden Sensoren (1,...,n), mittels derer das Kauorgan oder der Bereich gescannt wird,
**dadurch gekennzeichnet,**
**dass** die Halterung (20) eine dreidimensionale Geometrie zum zumindest bereichsweisen Umfassen eines Kieferbereichs aufweist, dass die Sensoren (1,...,n) Einzelscan-Optiken aufweisen, die nach dem Prinzip Multipunkt OCT (optische Kohärenztomografie), Multipunkt konfokaler Abbildung oder Multipunkt konfokal, farbdispersiv aufgebaut sind und Scanflächen ergeben, dass in der die Sensoren aufweisenden Halterung (20) eine Elektronik (30) zum Zusammenführen von mit den Sensoren ermittelten Daten integriert ist, dass die Sensoren derart an der Halterung befestigt sind, dass gleichzeitig okklusaler, vestibulärer und palatinaler/lingualer Bereich (O, V, P) von zumindest einem Bereich des Kauorgans scanbar ist und dass die Halterung (20) mit einer zumindest die Sensoren (1,...,n) abdeckenden transparenten Umhüllenden versehen ist.

11. Vorrichtung nach Anspruch 10,
**dadurch gekennzeichnet,**
**dass** in der Halterung (20) eine Spannungsquelle (40) integriert ist.

12. Vorrichtung nach Anspruch 10,
**dadurch gekennzeichnet,**
**dass** der Sensor (1,...,n) ein Sensor aus der Gruppe CCD-, CMOS-, InGaAs-, PbS-Sensor, Miniaturkamera im Submillimeterbereich ist.

13. Vorrichtung nach zumindest Anspruch 10,
**dadurch gekennzeichnet,**
**dass** die Halterung (20) ein Inertialsystem aufweist.

## Claims

1. Method for determining a combined dataset of a masticatory organ or an area of such using individual datasets based on partial scans of said masticatory organ or its area which are measured with at least one sensor (1,...,n),
**wherein**
by means of several sensors (1,...,n) arranged in a stationary relationship on a holder (20), partial scans of said masticatory organ or of the area thereof are determined, from whose individual datasets a combined dataset representing said masticatory organ or its area is calculated, said sensors being moved in uncorrelated manner relative to said masticatory organ or its area during the measurement and said holder having a geometry for covering an area to be measured of said masticatory organ and said sensors being arranged on said holder such that the occlusal, vestibular and palatinal/lingual areas of the one area of said masticatory organ are scanned simultaneously, said holder (20) with said sensors (1,...,n) being covered by a transparent envelope.

2. Method according to claim 1,
**wherein**
the sensors (1,...,n) have individual scan optics which are designed according to the principle of multi-point OCT (optical coherence tomography), multi-point confocal imaging or multi-point confocal chromatically dispersive.

3. Method according to claim 1 or 2,
wherein
a CCD, CMOS, InGaAs or PbS sensor is used as a sensor (1,...,n).

4. Method according to at least one of claims 1 to 3,
wherein
a miniature camera in the sub-millimeter range is used as a sensor (1,...,n).

5. Method according to at least claim 1,
**wherein**
the optic of the sensor (1,...,n) is designed confocal.

6. Method according to claim 1,
**wherein**
beside the sensors (1,...,n) an electronic unit (30) for merging data flows of said sensors and a voltage source are integrated in the holder (20), a battery (40) with inductive charging option preferably being used as said voltage source.

7. Method according to at least claim 1,
**wherein**
transmission of the data of the sensors (1,...,n) extending from the holder (20) is wireless.

8. Method according to at least claim 1,
**wherein**
the holder (20) with the elements extending therefrom is dimensioned such that an at least partial insertion into a mouth of a patient is effected.

9. Method according to at least claim 1,
**wherein**
the sensors (1,...,n) are arranged such that the individual scans thereof are contiguous without any gap or overlap at least in sections.

10. Device for scanning a masticatory organ or an area thereof comprising a holder (20) with several sensors (1,...,n) extending therefrom, by means of which said masticatory organ or said area is scanned,
**wherein**
the holder (20) has a three-dimensional geometry for covering at least some areas of a jaw area, said sensors (1,...,n) have individual scan optics which are designed according to the principle of multi-point OCT (optical coherence tomography), multi-point confocal imaging or multi-point confocal chromatically dispersive and result in scanned surfaces, an electronic unit (30) for merging data flows determined with said sensors is integrated in said holder (20) containing said sensors, said sensors are fastened to said holder such that occlusal, vestibular and palatinal/lingual (O, V, P) areas of at least one area of said masticatory organ can be scanned simultaneously, and said holder (20) is provided with a transparent envelope covering at least said sensors (1,...,n).

11. Device according to claim 10,
**wherein**
a voltage source (40) is integrated in the holder (20).

12. Device according to claim 10,
**wherein**
the sensor (1,...,n) is a sensor from the group CCD, CMOS, InGaAs, PbS sensor, miniature camera in the sub-millimeter range.

13. Device according to at least claim 10,
**wherein**
the holder (20) has an inertial system.

## Revendications

1. Procédé pour déterminer un jeu de données complet d'un organe de mastication ou d'une zone d'un tel organe en utilisant des jeux de données individuels basés sur des balayages partiels de l'organe de mastication ou d'une zone de celui-ci, lesquels balayages partiels sont mesurés avec au moins un capteur (1,...,n),
**caractérisé en ce**
**que** sont déterminés des balayages partiels de l'organe de mastication ou de la zone d'un tel organe au moyen de plusieurs capteurs (1,...,n) disposés sur un support (20) dans une liaison locale fixe, qu'à partir de leurs jeux de données individuels est calculé un jeu de données complet représentant l'organe de mastication ou sa zone, sachant que pendant la mesure, les capteurs sont déplacés sans corrélation avec l'organe de mastication ou sa zone, et sachant que le support présente une géométrie comprenant une zone à mesurer de l'organe de mastication et que les capteurs sont disposés sur le support de telle sorte qu'est balayée simultanément la région occlusale, vestibulaire et palatine/linguale de ladite une zone de l'organe de mastication et sachant que le support (20) avec les capteurs (1,...,n) est recouvert d'une enveloppe transparente.

2. Procédé selon la revendication 1,
**caractérisé en ce**
**que** les capteurs (1,...,n) présentent des instruments optiques à balayage individuel qui sont conçus selon le principe OCT (tomographie par cohérence optique) multipoint, imagerie confocale multipoint ou confocale multipoint à dispersion.

3. Procédé selon la revendication 1 ou 2,
**caractérisé en ce**
**qu'**est utilisé comme capteur (1,...,n) un capteur CCD, CMOS, InGaAs ou PbS.

4. Procédé selon au moins une des revendications 1 à 3,
**caractérisé en ce**
**qu'**est utilisé comme capteur (1,...,n) une caméra miniature dans la plage submillimétrique.

5. Procédé selon au moins la revendication 1,
**caractérisé en ce**
**que** l'instrument optique du capteur (1,...,n) est confocal.

6. Procédé selon la revendication 1,
**caractérisé en ce**
**qu'**un système électronique (30) servant à regrouper les flux de données des capteurs et une source de tension sont intégrés au support (20) à côté des capteurs (1,...,n), sachant qu'est utilisée de préférence une batterie (40) avec possibilité de charge par induction comme source de tension.

7. Procédé selon au moins la revendication 1,
**caractérisé en ce**
**que** la transmission des données des capteurs (1,...,n) partant du support (20) est réalisée sans fil.

8. Procédé selon au moins la revendication 1,
**caractérisé en ce**
**que** le support (20) avec les éléments partant de celui-ci est dimensionné de sorte à permettre une insertion au moins partielle dans la bouche d'un patient.

9. Procédé selon au moins la revendication 1,
**caractérisé en ce**
**que** les capteurs (1,...,n) sont disposés de telle sorte que les balayages individuels de ceux-ci se juxtaposent sans intervalle ou se chevauchent au moins en partie.

10. Dispositif pour balayer un organe de mastication ou une zone de celui-ci, comprenant un support (20) avec plusieurs capteurs (1,...,n) partant dudit support et au moyen desquels l'organe de mastication ou la zone est balayé(e),
**caractérisé en ce**
**que** le support (20) présente une géométrie tridimensionnelle pour comprendre au moins en partie une zone de la mâchoire, que les capteurs (1,...,n) présentent des instruments optiques à balayage unique qui sont conçus selon le principe OCT (tomographie par cohérence optique) multipoint, imagerie confocale multipoint ou confocale multipoint à dispersion et donnent des aires de balayage, qu'un système électronique (30) servant à regrouper les données déterminées par les capteurs est intégré au support (20) présentant les capteurs, que les capteurs sont fixés sur le support de telle sorte qu'est balayée simultanément la région occlusale, vestibulaire et palatine/linguale (O, V, P) d'au moins une zone de l'organe de mastication et que le support (20) est pourvu d'une enveloppe transparente recouvrant au moins les capteurs (1,...,n).

11. Dispositif selon la revendication 10,
**caractérisé en ce**
**qu'**une source de tension (40) est intégrée au support (20).

12. Dispositif selon la revendication 10,
**caractérisé en ce**
**que** le capteur (1,...,n) est un capteur appartenant au groupe des capteurs CCD, CMOS, InGaAs, PbS, caméra miniature dans la plage submillimétrique.

13. Dispositif selon au moins la revendication 10,
**caractérisé en ce**
**que** le support (20) présente un système inertiel.
